# EUROPEAN PATENT APPLICATION

(11) **EP 2 187 696 A1**
(43) Date of publication of application: **19.05.2010**
(21) Application number: 08790710.1
(22) Date of filing: 27.06.2008
(51) Int. Cl.: H04W 88/02, H04B 1/707, H04W 4/00

(54) **BASE STATION DEVICE IN MOBILE COMMUNICATION SYSTEM, MOBILE STATION DEVICE, AND BASE STATION CONTROL METHOD**

(30) Priority: 27.08.2007 JP 2007220257
(71) Applicant: NTT DoCoMo, Inc., Chiyoda-ku Tokyo 100-6150 (JP)
(72) Inventor: ISHII, Akira, Tokyo 100-6150 (JP); HOSONO, Hiroyuki, Tokyo 100-6150 (JP); MORI, Shinichi, Tokyo 100-6150 (JP); OOYA, Tomoyuki, Tokyo 100-6150 (JP)
(74) Representative: HOFFMANN EITLE
(86) International application number: PCT/JP2008/061745
(87) International publication number: WO 2009/028258

(57) **Abstract**

A disclosed base station apparatus in a mobile communication system includes a receiving unit receiving a random access channel transmitted from a mobile station apparatus, an acquisition unit acquiring random access channel quality based on a measurement of the received random access channel or a report from the mobile station apparatus, a calculation unit calculating random access channel parameters based on the acquired random access channel quality, and a broadcast unit broadcasting the calculated random access channel parameters to all the mobile stations within a coverage area of the base station.

## Description

### TECHNICAL FIELD

The present invention generally relates to a technical field of mobile communications, and more particularly to a base station apparatus, a mobile station apparatus, and a base station control method in a mobile communication system.

### BACKGROUND ART

In the CDMA (Code Division Multiple Access) mobile communication system and in the LTE (Long Term Evolution) system having been studied and standardized by the 3GPP (3rd Generation Partnership Project) lately, when a radio link is connected, after establishing a downlink radio link by performing the cell search, a mobile station transmits an uplink Random Access Channel (hereinafter simplified as RACH) to perform random access (see Non-Patent Documents 1 through 3). As known methods of multiplexing the RACH with a data channel, there are the time-multiplexing method in which the RACH and the data channel are transmitted in different time frames, the frequency-multiplexing method in which the RACH and the data channel are transmitted in different frequencies, and the code-multiplexing method in which the RACH and the data channel are transmitted using different codes. When the RACH is transmitted, the mobile stations perform contention-based access. Therefore, based on the number of mobile stations within a coverage area of each base station and the call probabilities, it is required to allocate minimally required radio resources that satisfy a required success probability or a required time period. In this case, the more radio resources are allocated to the RACH, the slower the throughput of the data channel. On the other hand, the less radio resources are allocated, the more difficult to satisfy the required success probability and the required time period. The resources (radio resources) herein include time resources, frequency resources, code resources, and space resources.

In the W-CDMA (Wideband Code Division Multiple Access) mobile communication system, the RACH and the data channel are code-multiplexed, and a preamble power ramping scheme are employed. The preamble is a short signal transmitted before an RACH message is transmitted and is spread using a predetermined spreading code. By receiving the preamble in advance, the base station can specify the receiving timings and the using spreading code of the RACH message (message part) to be transmitted later. Because of this feature, the load in receiving process of the message part may be reduced and the receiving performance in the base station may be improved. In the preamble power ramping scheme, the preamble is repeatedly transmitted plural times from the mobile station until the mobile station receives a reception response (Acknowledgement or Ack) from the base station, the reception response (Ack) indicating the detection of the preamble by the base station. Further, in this case, the transmission power of the preamble is gradually increased as the number of repeated transmission is increased. Upon receiving the reception response (Ack), the mobile station stops the transmission of the preamble and transmits the message part at the same transmission power level as that of the last preamble transmitted to the base station. The preamble is 4096 chip-long signal sequence in which a 16 chip-long signature is repeated 256 times. There are 16 kinds of signatures. If the number of kinds of the signatures is increased, the repeated number is decreased, and therefore, the decoding characteristics are degraded and a complexity in decoding process is increased. On the other hand, if the number of kinds of the signature is decreased, when plural mobile stations perform the random accesses at the same time, the collision probability of using the same signature is increased. Therefore, the number of kinds of the signatures is determined by assuming (considering) the number of mobile stations within the coverage areas of the typical base stations and the uplink interference amounts from the mobile stations.

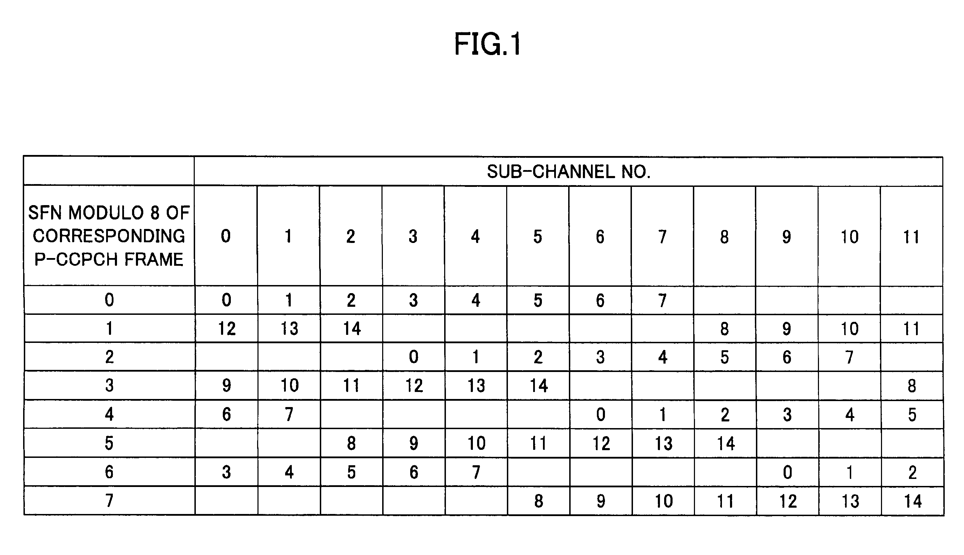

The timings when the mobile station can transmit the preamble are divided in a random access sub-channel. FIG. 1 shows usable access slots in the random access sub-channel. In FIG. 1, the vertical direction represents System Frame Number (SFN) modulo 8 corresponding to Primary Common Control Physical Channel (P-CCPCH), and the lateral direction represents random access sub-channel numbers. In. FIG. 1, the numbers in the sections specified by the SFN modulo 8 and the random access sub-channel numbers represent access slots. The random access sub-channel is a sub-set of combinations of all the uplink access slots in the W-CDMA mobile communication system. The access slots refer to 15 predetermined time offsets provided at 5120 chip interval in two radio frames. When the number of the random access sub-channels is increased, the collision probability between mobile stations is decreased. However, in this case, the transmission interval of the preamble is elongated, and therefore, longer time is required to perform the random access. Because of the feature, the number of random access sub-channels is determined by assuming (considering) the number of mobile stations within the coverage areas of the typical base stations.

In the LTE system, as the method of multiplexing the RACH and the data channel, the time-multiplexing method, the frequency-multiplexing method, and the code-multiplexing method are studied. Further, similar to the W-CDMA mobile communication system, the preamble power ramping scheme and the spreading of the preamble using the signatures are also studied. As the number of kinds of the signatures, an adequate number is determined based on the number of mobile stations within the coverage areas of the typical base stations, the uplink interference amount from the mobile stations, and an amount of radio resources to be allocated to the RACH. The preamble length, which is shorter than the length of several sub-frames, is determined based on a balance with a guard time determined by considering uncertainty of receiving time of uplink signals.
Non-Patent Document 1: Keiji TACHIKAWA, W-CDMA mobile communication system, Maruzen K.K., issued on June 25, 2001
Non Patent Document 2: 3GPP TSG RAN1#44-bis, R1-060885, March 27-March 30, 2006
Non Patent Document 3: 3GPP TSG RAN1#44-bis, R1-061041, March 27-March 30, 2006

### DISCLOSURE OF INVENTION

### PROBLEMS TO BE SOLVED BY THE INVENTION

In a mobile communication system, due to a large number of existing base stations, hard work may be required to design and modify radio parameters for the system. In other words, it may be difficult to optimize the radio parameters in real time in response to the changes of traffic distribution, propagation environments, and peripheral environment due to such as installation and removal of a surrounding base station. In a case where the radio parameters are not adequately set, a cell throughput and a call-blocking rate may be degraded, and a non-service area may also be generated. To overcome these problems, methods of performing automatic initial setting and automatic optimization of the radio parameters have been studied. However, no method has been proposed so far to perform automatic initial setting and automatic optimization of the parameters with regard to the RACH.

The present invention is made in light of the above circumstances and may provide a base station appratus, a mobile station apparatus, and base station control method capable of performing automatic initial setting and automatic optimization of the radio parameters for the RACH, the parameters including an allocation amount of the radio resources, initial transmission power level, increase of transmission power in power ramping scheme, the maximum retransmission number, the number of kinds of signatures, the number of the random access sub-channels and the like.

### MEANS FOR SOLVING THE PROBLEMS

According to an aspect of the present invention, a base station apparatus in a mobile communication system includes a receiving unit receiving a random access channel transmitted from a mobile station apparatus, an acquisition unit acquiring random access channel quality based on a measurement of the received random access channel or a report from the mobile station apparatus, a calculation unit calculating random access channel parameters based on the acquired random access channel quality, and a broadcast unit broadcasting the calculated random access channel parameters to all the mobile stations within a coverage area of the base station.

### ADVANTAGEOUS EFFECT OF THE INVENTION

In a mobile communication system, a base station apparatus, a mobile station apparatus, a base station control method according to an embodiment of the present invention may be capable of performing automatic initial setting and automatic optimization of RACH parameters.

### BRIEF DESCRIPTION OF THE DRAWINGS

FIG. 1 is a (first) drawing illustrating usable access slots in random access sub-channels;
FIG. 2 is a block diagram illustrating exemplary configurations of a base station apparatus and a mobile station apparatus according to an embodiment of the present invention;
FIG. 3 is a drawing illustrating an preamble power ramping operation;
FIG. 4 is a sequence diagram illustrating an exemplary process of RACH resource control;
FIG. 5 is a flowchart illustrating an exemplary process of observing RACH quality and calculating RACH parameters based on a report on the number of retrasmissions performed at the maximum transmission power level, the report being transmited from the mobile station apparatus;
FIG. 6 is another (second) drawing illustrating the usable access slots in the random access sub-channels;
FIG. 7 is another (third) drawing illustrating the usable access slots in the random access sub-channels;
FIG. 8 is a flowchart illustrating an exemplary process of observing the RACH quality and calculating the RACH parameters based on a report on the number of retrasmission, the report being transmited from the mobile station apparatus;
FIG. 9 is a flowchart illustrating an exemplary process of observing the RACH quality and calculating the RACH parameters based on a report on success probability, the report being transmited from the mobile station apparatus; and
FIG. 10 is a flowchart illustrating an exemplary process of observing the RACH quality and calculating the RACH parameters in the base station apparatus.

### EXPLANATION OF REFERENCES

100: BASE STATION APPARATUS
101: RACH RECEIVING SECTION
102: RACH QUALITY RECEIVING SECTION
103: RACH QUALITY ACQUIRING SECTION
104: RACH PARAMETER CALCULATION SECTION
105: RACH PARAMETER CHANGE INSTRUCTION BROADCASTING SECTION
200: MOBILE STATION APPARATUS
201: RACH PARAMETER CHANGE INSTRUCTION RECEIVING SECTION
202: RACH PARAMETER CONTROL SECTION
203: RACH TRANSMISSION SECTION
204: RACH QUALITY MEASUREMENT SECTION
205: RACH QUALITY TRANSMISSION SECTION

### BEST MODE FOR CARRYING OUT THE INVENTION

According to an embodiment of the present invention, a base station apparatus in a mobile communication system includes a receiving unit receiving a random access channel transmitted from a mobile station apparatus, an acquisition unit acquiring random access channel quality based on a measurement of the received random access channel or a report from the mobile station apparatus, a calculation unit calculating random access channel parameters based on the acquired random access channel quality, and a broadcast unit broadcasting the calculated random access channel parameters to all the mobile stations within a coverage area of the base station.

Preferably, the random access channel quality may include at least one of a retransmission number of the random access channel, a retransmission number of the random access at a maximum transmission power level under a control of increasing a transmission power level of the random access channel when a receipt of the random access channel is failed in the base station apparatus, a success probability of the random accesses, a detection probability of the random access channel, a number of mobile station apparatuses having attempted to perform the random accesses per unit time, a number of mobile station apparatuses having succeeded to perform the random access per unit time, and a number of mobile station apparatuses having failed to perform the random access per unit time.

Further, preferably, the random access channel parameters may include at least one of time, frequency, an allocated amount of code or space, initial transmission power level, increase of transmission power, a maximum retransmission number, a number of signatures, and a number of sub-channels.

According to another aspect of the present invention, a mobile station apparatus in a mobile communication system includes a measurement unit measuring random access channel quality, a reporting unit reporting the measured random access channel quality to a base station apparatus, a receiving unit receiving random access channel parameters broadcasted from the base station apparatus, a control unit controlling the random access channel parameters, and a transmission unit transmitting a random access channel based on the controlled random access channel parameters.

Preferably, the random access channel quality may include at least one of a retransmission number of the random access channel, a retransmission number of the random access at a maximum transmission power level under a control of increasing a transmission power level of the random access channel when a receipt of the random access channel is failed in the base station apparatus, a success probability of the random accesses, and a detection probability of the random access channel.

According to another aspect of the present invention, a control method used in a base station apparatus mobile in a mobile communication system includes the steps of receiving a random access channel transmitted from a mobile station apparatus, acquiring random access channel quality based on a measurement of the received random access channel or a report from the mobile station apparatus, calculating random access channel parameters based on the acquired random access channel quality, and broadcasting the calculated random access channel parameters to all the mobile stations within a coverage area of the base station.

In the following preferred embodiments of the present invention are described with reference to the accompanying drawings.

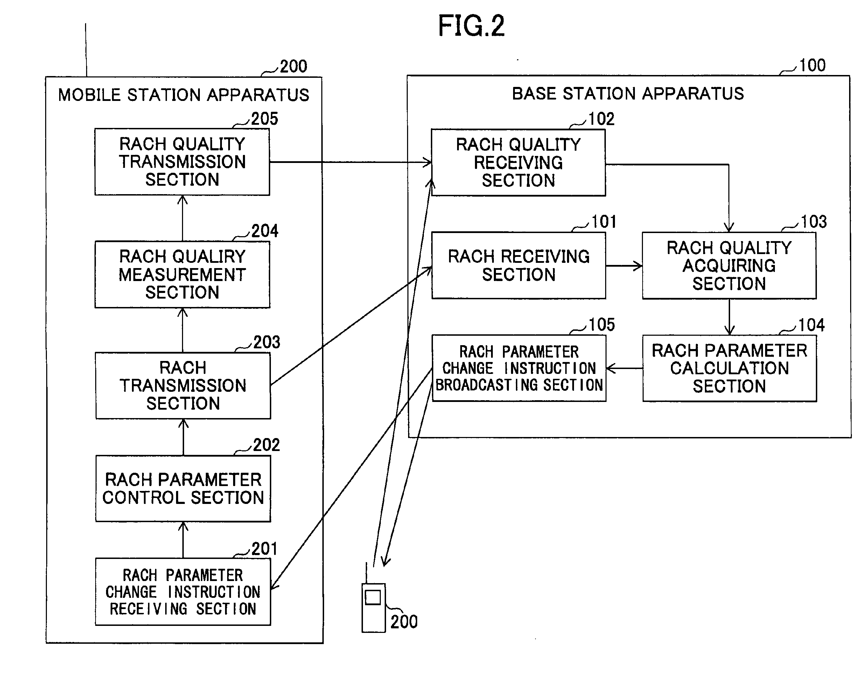

FIG. 2 is a block diagram illustrating exemplary configurations of a base station apparatus 100 and a mobile station 200 apparatus according to an embodiment of the present invention. For simplification purposes, FIG. 2 describes only two mobile station appratuses within a converage area of the base station apparatus; however, there may be many more mobile station appratues existing within the coverage area of the base station apparatus.

As shown in FIG. 2, the base station apparatus 100 includes an RACH (Random Access Channel) receiving section 101, an RACH quality receiving section 102, an RACH quality acquiring section 103, an RACH parameter calculation section 104, and an RACH parameter change instruction broadcasting section 105. Further, the mobile station apparatus 200 includes an RACH parameter change instruction receiving section 201, an RACH parameter control section 202, an RACH transmission section 203, an RACH quality measurement section 204, and an RACH quality transmission section 205.

In the base station apparatus 100, the RACH receiving section 101 receives a random access channel (RACH) transmitted from the mobile station apparatus 200.

The RACH quality receiving section 102 receives data indicating the quality of RACH (RACH quality), the data having been transmitted from the mobile station apparatus 200.

The RACH quality acquiring section 103 acquires the data of the RACH quality received by the RACH quality receiving section 102, and measures the RACH quality by observing the RACH quality for a predetermined time period.

The RACH parameter calculation section 104 acquires either the measurement result of the RACH quality in the RACH quality acquiring section 103 or the RACH quality that is measured by the mobile station apparatus 200 and that is received by the RACH quality receiving section 102. Further, the RACH parameter calculation section 104 detects a parameter for the RACH (RACH parameter) to be modified (changed), and performs calculations on the detected RACH parameter.

The RACH parameter change instruction broadcasting section 105 broadcasts an instruction to change the RACH parameter (RACH parameter change instruction) to all the mobiles station terminals 200 within coverage areas of the base station apparatus 100.

In the mobile station apparatus 200, the RACH parameter change instruction receiving section 201 receives the RACH parameter change instruction broadcasted by the RACH parameter change instruction broadcasting section 105 of the base station apparatus 100.

The RACH parameter control section 202 controls the designated RACH parameter based on the RACH parameter change instruction received by the RACH parameter change instruction receiving section 201.

The RACH transmission section 203 transmits the RACH based on the controlled RACH parameter.

The RACH quality measurement section 204 measures at least one of the number of retransmission (retransmission number) of the RACH, the retransmission number at the maximum transmission power level under a control of increasing the transmission power level of the RACH when the base station apparatus 100 fails to receive the RACH, a success probability of the random accesses, and a detection probability of RACH, as the RACH quality.

The RACH quality transmission section 205 transmits the RACH quality measured by the RACH quality measurement section 204 to the base station apparatus 100 having the coverage area where the mobile station apparatus 200 is located.

### First embodiment

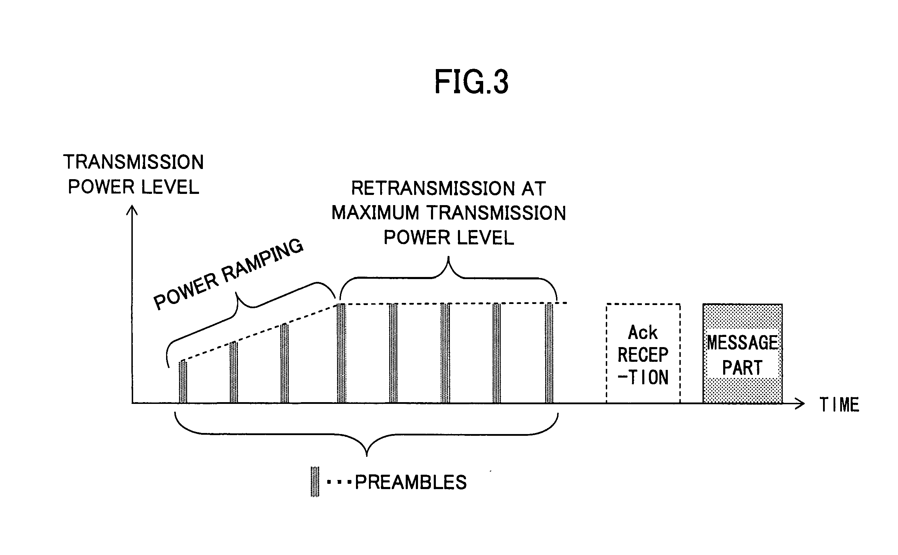

FIG. 3 illustrates a preamble power ramping operation. In the preamble power ramping operation shown in FIG. 3, upon normally receiving the RACH from the mobile station apparatus 200, the base station apparatus 100 transmits a reception response (Acknowledgement or Ack) to the mobile station apparatus 200. On the other hand, the mobile station apparatus 200 gradually increase the transmission power level of the preamble and retransmits the preamble until the reception response (Ack) is received. In a case where even when the mobile station apparatus 200 transmits the preamble at the maximum transmission power level, if the base station apparatus 100 cannot normally receive the preamble, the probability of collision with an RACH of another mobile station apparatus 200 is high.

When the received power level of the preamble in the random access is low or when an interference power level is high at the base station apparatus 100, the base station apparatus 100 may not normally recognize the transmission power level of the preamble nor the retransmission number of the preamble. Therefore, according to an embodiment of the present invention, the mobile station apparatus 200 notifies the base station apparatus 100 of data indicating the number of retransmission of the preamble, the number of retransmission of the preamble at the maximum transmission power level, a success probability of the random accesses, a detection probability of the RACH, the number of attempt to perform the random access, and the number of failed to perform the random access. Then, and based on the above notified data, the base station apparatus 100 calculates the RACH parameter.

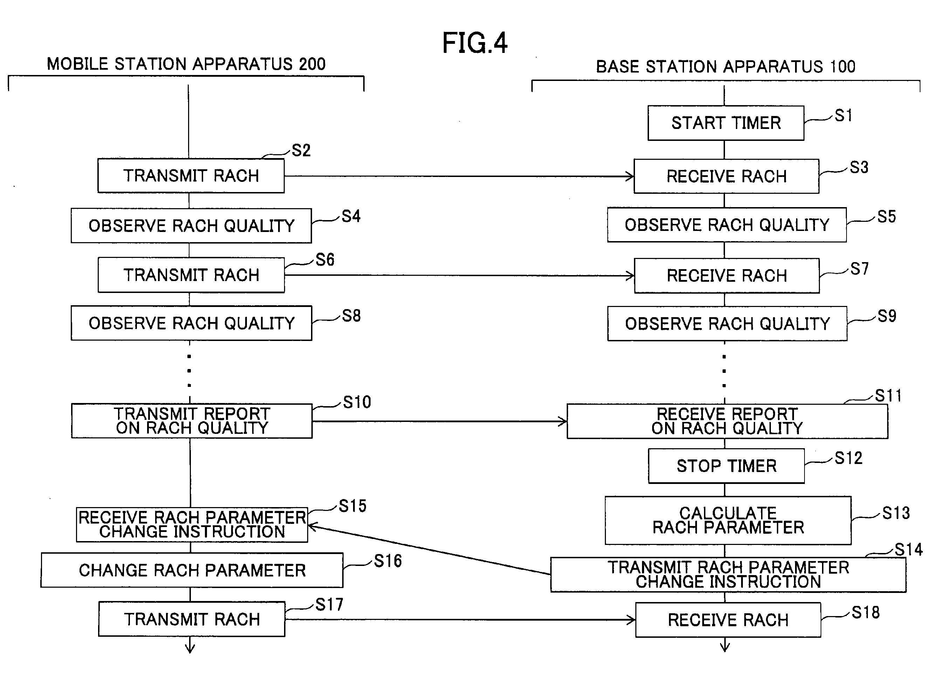

FIG. 4 is a sequence diagram illustrating an exemplary process of RACH resource control according to an embodiment of the present invention.

As shown in FIG. 4, in the process of the RACH resource control, the base station apparatus 100 starts a timer to measure the predetermined time period (step S1).

Then, the mobile station apparatus 200 transmits the RACH to perform the random access (step S2), and the base station apparatus 100 receives the RACH (step S3).

Further, the mobile station apparatus 200 observes and measures various amounts related to the RACH quality (step S4). As specific examples, the various amounts related to the RACH quality may include the retransmission number of the preamble, the retransmission number of the preamble at the maximum transmission power level, a success probability of the random accesses, a detection probability of the RACH, the number of attempt to perform the random access, the number of failed to perform the random access and the like.

The base station apparatus 100 also observes and measures various amounts related to the RACH quality (step S5). As specific examples, the various amounts related to the RACH quality may include a decoding probability of the preambles, an SIR (Signal to Interference power Ratio: in this case, a ratio of received power level of the RACH to interference power level and noise power level) of known symbols transmitted by using resource blocks for the RACH, the number of reception of the preambles and the like. The decoding probability of the preamble is a value obtained by dividing the number of times of successful decoding of the preambles by the number of reception of the preambles in a predetermined time period. In cases other than cases of successful decoding of the preambles, it cannot be determined whether the mobile station apparatus 200 transmitted the preambles. However, as long as the received power level of the signal received by using the resource blocks for the RACH is greater than a threshold value, by regarding (assuming) that the preambles are received, the number of reception of the preambles are calculated. Otherwise, the mobile station apparatus 200 may transmit known symbols by using resource blocks for the RACH, so that the base station apparatus 100 may measure the SIR of the resource blocks; then, the measured SIR may be treated as the RACH quality.

After that, similarly, the mobile station apparatus 200 transmits the RACH (step S6), and the base station apparatus 100 receives the RACH (step S7); then, the RACH quality is observed in the mobile station apparatus 200 and the base station apparatus 100 (steps S8 and S9). Then, the base station apparatus 100 transmits the reception response (Ack) indicating successful reception of the preamble to the mobile station apparatus 200. The above process is repeated until the mobile station apparatus 200 receives the reception response (Ack).

After that, the mobile station apparatus 200 transmits a report on the RACH quality to the base station apparatus 100 (step S10). Then, the base station apparatus 100 receives the report on the RACH quality (step S11).

The above process is repeated until the timer is stopped (step S12).

When the timer is stopped, the base station apparatus 100 receives a measurement result of the RACH quality from the mobile station apparatus 200. Further, the base station apparatus 100 calculates the RACH parameters based on the RACH quality measured by the base station apparatus 100 (step S13). In this case, when determining that the RACH quality is better than a predetermined quality, the base station apparatus 100 reduces the resources to be allocated to the RACH. The reduce of the resources for the RACH may be performed by adequately increasing the transmission rate per symbol in modulation and demodulation so as to reduce time, frequency, code, or space resource to be allocated to the RACH. Further, the resources for the RACH may be reduced by reducing the number of kinds of signatures and the number of random access sub-channels, by reducing the initial transmission power level of the RACH, or by reducing the increase of the transmission power in power ramping. Any of the above methods of reducing the resources for the RACH may be perfomed alone or in any combination thereof.
On the other hand, when determining that the RACH quality is worse than the predetermined quality, the base station apparatus 100 increases the resources to be allocated to the RACH. The increase of the resources for the RACH may be performed by adequately reducing the transmission rate per symbol in modulation and demodulation so as to increase time, frequency, code, or space resources to be allocated to the RACH. Further, the resources for the RACH may be increased by increasing the number of kinds of signatures and the number of random access sub-channels, by increasing the initial transmission power level of the RACH, or by increasing the increase of the transmission power in power ramping. Any of the above methods of increasing the resource for the RACH may be perfomed alone or in any combination thereof.

Then, the base station apparatus 100 broadcasts an instruction to change the RACH parameter (RACH parameter change instruction) to the mobile station apparatus 200 (step S14). The mobile station apparatus 200 receives the RACH parameter change instruction (step S15).

The mobile station apparatus 200 changes the RACH parameter based on the received RACH parameter change instruction (step S16).

After that, the mobile station apparatus 200 transmits the RACH using the changed RACH parameter (step S17), and the base station apparatus 100 receives the RACH (step S18). The above process goes back to step 1 to start the timer to similarly repeat the process.

### Second embodiment

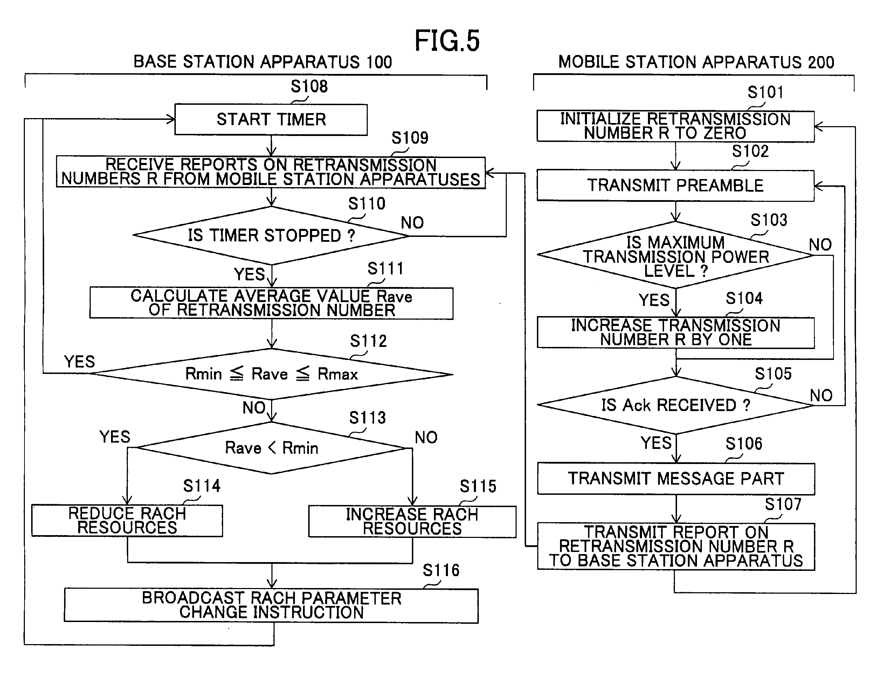

FIG. 5 is a flowchart illustrating an exemplary process of observing RACH quality and calculating RACH parameters based on a report on the number of retrasmissions performed at the maximum transmission power level, the report being transmitted from the mobile station apparatus. Upon starting the random access, the mobile station apparatus 200 initializes the number of retransmission (retransmission number) R by setting its value to zero (step S101), and transmits the preamble (step S102). Then, the mobile station apparatus 200 determines whether the transmission power level of the preamble is the maximum transmission power level (step S103). When detemining that the transmission power level of the preamble is the maximum transmission power level (YES in step S103), the process goes to step S104, where the retransmission number R is increased by one. Then, the mobile station apparatus 200 determines whether the reception response (Ack) is received from the base station apparatus 100 within a predetermined time period (step S105). When determining that the reception response (Ack) is not received within the predetermined time period (NO in step S105), the process goes back to step S102, where unless the transmission power level of the preamble is equal to the maximum transmission power level, the transmssion power level of the preamble is increased, and the mobile station apparatus 200 retransmits the preamble (step S102).
On the other hand, when determining that the reception response (Ack) is received within the predetermined time period (YES in step S105), the process goes to step S106, where mobile station apparatus 200 transmits the message part of the random access to the base station apparatus 100. Next, the mobile station apparatus 200 transmits the measured retransmission number R to the base station apparatus 100 by including the retransmission number R in the message part or by using another signal (step S107), and intializes the retransmission number R (step S101).

The base station apparatus 100 starts a timer (step S108) and then, receives reports on the retransmission number R from the mobile station apparatuses 200 (step S109). Next, the base station apparatus 100 determines whether the timer is stopped (step S110). When determining that the timer is not stopped (NO in step S110), the process goes back to step S109, where the base station apparatus 100 further receives the reports on the retrnsmission number R from the mobile station apparatuses 200. On the other hand, when determining that the timer is stopped (YES in step S110), the process goes to step S111, where the base station apparatus 100 calculates an average value or a median value Rave (value Rave) of the retransmission number at the maximum transmission power level per random access (step S111). Then, the base station apparatus 100 compares the value Rave with predetermined threshold values (step S112 and S113).
When determining that the value Rave is equal to or greater than the minimum value (Rmin) of a predetermined target range and equal to or less than the maximum value (Rmax) of the predetermined target range, the process goes back to steps S108 and S109 to start the timer and receives the reports on the RACH quality from the mobile station apparatuses 200.
On the other hand, when determining that the value Rave is less than the value Rmin, it is supposed that the frequency of collisions of the RACH between the mobile station apparatuses 200 is low and that the resources for the RACH are excessively allocated. Therefore, the base station apparatus 100 reduces the resources for the RACH by reducing the time, frequency, code, or space resources to be allocated to the RACH or by reducing the number of the kinds of the signatures and the number of the random access sub-channels (step S114). Then, the base station apparatus 100 broadcasts the RACH parameter change instruction to the mobile station apparatuses 200 (step S116). Then, the process goes back to steps S108 and S109 to start the timer and receive the reports on the RACH quality from the mobile station apparatuses 200 again.

The time resources may be reduced by, for example, reducing the number of the time slots and the number of the sub-frames to be allocated to the RACH.

In the ODFMA (Orthogonal Frequency Division Multiple Access) system or the SC-FDMA (Single-Carrier Frequency Division Multiple Access) system, the frequency resources may be reduced by, for example, reducing the number of the sub-carriers or the number of the frequency blocks which are groups of plural sub-carriers.

In a system where the RACH and the data channel are multiplexed using the codes, the code resources may be reduced by, for example, reducing the number of codes to be allocated to the RACH.

The number of kinds of the signatures may be reduced by, for example, reducing the length of the code sequence. In this case, however, the repeated number of the signature is accordingly increased.

Any of the above methods of reducing the resources for the RACH may be perfomed alone or in any combination thereof.

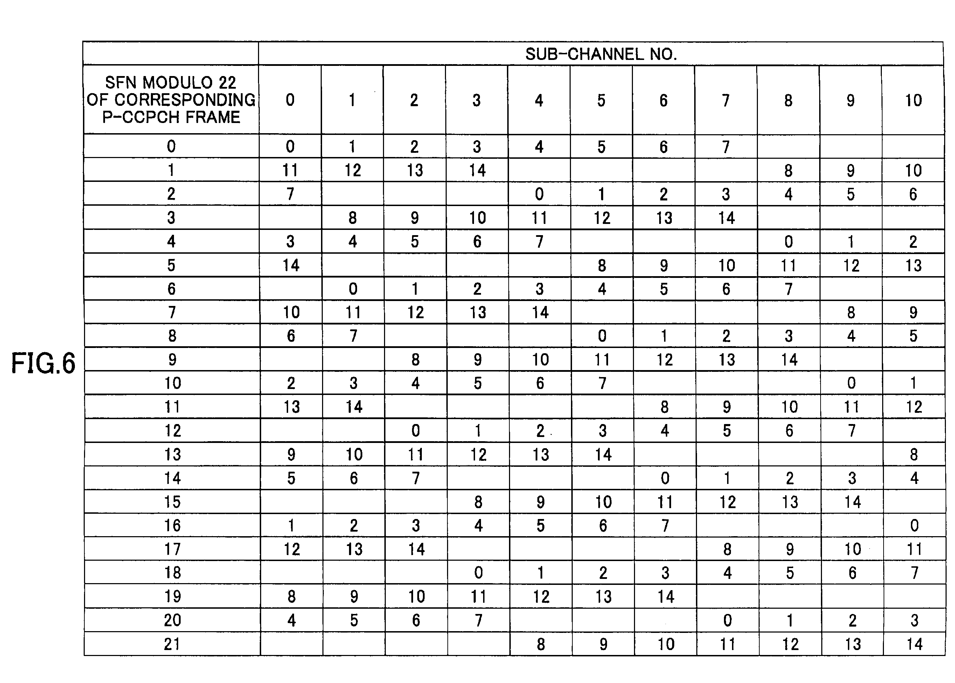

FIG. 6 shows a case where the number of the random access sub-channel is reduced to 11. The case where the number of the random access sub-channel is 12 is described in FIG. 1. When the number of the random access sub-channels is reduced as shown in FIG. 6, the positions of the access slots allocated in the random access sub-channels are shifted. Due to the shift, when the number of the random access sub-channels is 12 as shown in FIG. 1, each random access sub-channels has eight radio frames (in one cycle) and five access slots are included in the eight radio frames. As a result, 0.625 access slots per radio frame are allocated to the RACH. On the other hand, when the number of the random access sub-channels is 11 as shown in FIG. 6, each random access sub-channels has 22 radio frames and 15 access slots are included in the 22 radio frames. As a result, 0.682 access slots per radio frame are allocated to the RACH. As described above, when the number of the random access sub-channels is reduced, the collision probability between the mobile station apparatuses 200 is increased. However, the time interval between the transmissions of the preambles in the mobile station apparatuses 200 is reduced; and therefore, the time period required to perform the random access is decreased.

On the other hand, in FIG. 5, when determining that the value Rave is greater than the value Rmin, it is supposed that the frequency of collisions of the RACH between the mobile station apparatuses 200 is high and that the resources for the RACH are insufficiently allocated. Therefore, the base station apparatus 100 increases the resources for the RACH by increasing the time, frequency, code, or space resources to be allocated to the RACH or by increasing the number of the kinds of the signatures and the number of the random access sub-channels (step S115). Then, the base station apparatus 100 broadcasts the RACH parameter change instruction to the mobile station apparatuses 200 (step S116). Then, the process goes back to steps S108 and S109 to start the timer and receive the reports on the RACH quality from the mobile station apparatuses 200 again.

The time resources may be increased by, for example, increasing the number of the time slots and the number of the sub-frames to be allocated to the RACH.

In the ODFMA (Orthogonal Frequency Division Multiple Access) system or the SC-FDMA (Single-Carrier Frequency Division Multiple Access) system, the frequency resource may be increased by, for example, increasing the number of the sub-carriers and the number of the frequency blocks which are groups of plural sub-carriers.

In a system where the RACH and the data channel are multiplexed using the codes, the code resource may be increased by, for example, increasing the number of codes to be allocated to the RACH.

The number of kinds of the signatures may be increased by, for example, increasing the length of the code sequence. In this case, however, the repeated number of the signature is accordingly reduced.

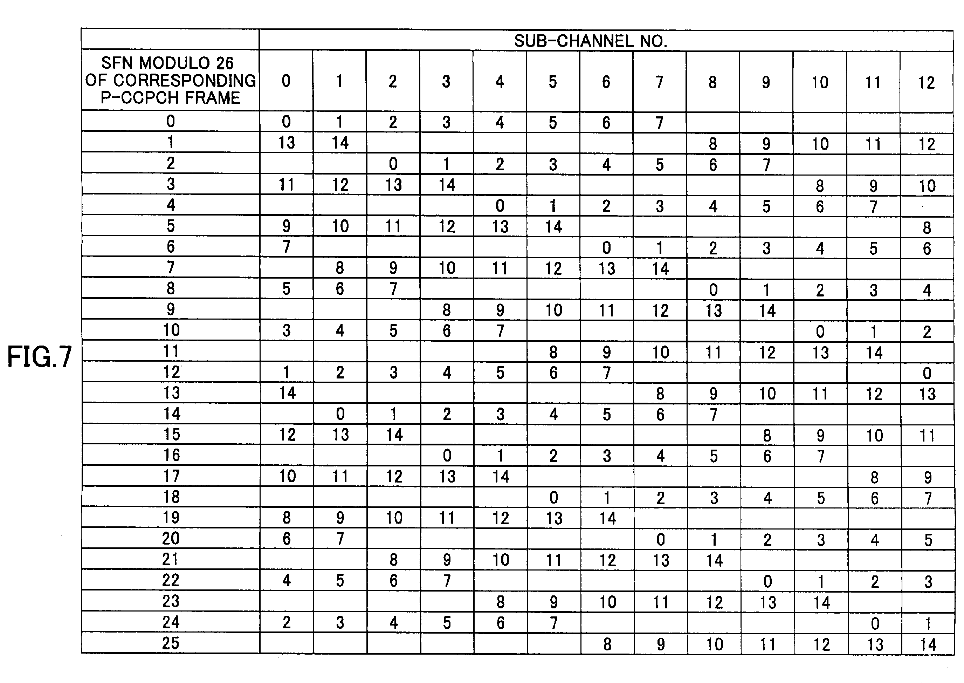

FIG. 7 shows a case where the number of the random access sub-channel is increased to 13. The case where the number of the random access sub-channel is 12 is described in FIG. 1. When the number of the random access sub-channels is increased as shown in FIG. 7, the positions of the access slots allocated in the random access sub-channels are shifted. Due to the shift, when the number of the random access sub-channels is 12 as shown in FIG. 1, each random access sub-channels has eight radio frames (in one cycle) and five access slots are included in the eight radio frames. As a result, 0.625 access slots per radio frame are allocated to the RACH. On the other hand, when the number of the random access sub-channels is 13 as shown in FIG. 7, each random access sub-channels has 26 radio frames, and 15 access slots are included in the 26 radio frames. As a result, 0.577 access slots per radio frame are allocated to the RACH.
As described above, when the number of the random access sub-channels is increased, the collision probability of the RACH between the mobile station apparatuses 200 is decreased. However, the time interval between the transmissions of the preambles in the mobile station apparatuses 200 is increased; and therefore, the time period required to perform the random access is increased.

Any of the above methods of increasing the resources for the RACH may be perfomed alone or in any combination thereof.

### Third embodiment

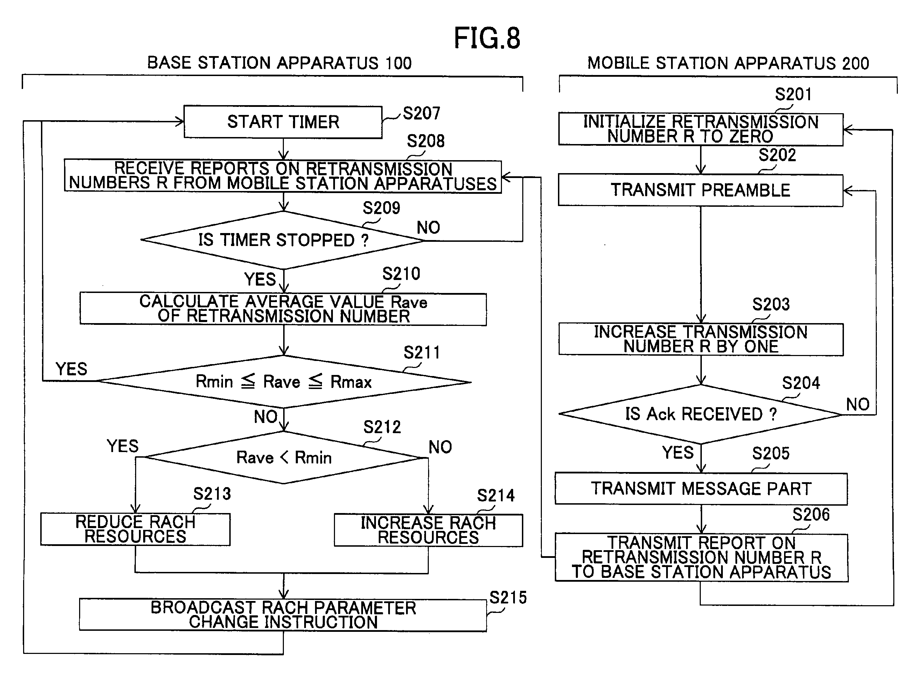

FIG. 8 is a flowchart illustrating an exemplary process of observing RACH quality and calculating RACH parameters based on a report on the number of retrasmissions, the report being transmitted from the mobile station apparatus. Upon starting the random access, the mobile station apparatus 200 initializes the retransmission number R by setting its value to zero (step S201), and transmits the preamble (step S202). Then, the mobile station apparatus 200 increases the retransmission number R by one (step S203). Next, the mobile station apparatus 200 determines whether the reception response (Ack) is received from the base station apparatus 100 within a predetermined time period (step S204). When determining that the reception response (Ack) is not received within the predetermined time period (NO in step S204), the process goes back to step S202, where unless the transmission power level of the preamble is equal to the maximum transmission power level, the transmssion power level of the preamble is increased, and the mobile station apparatus 200 retransmits the preamble. On the other hand, when determining that the reception response (Ack) is received within the predetermined time period (YES in step S204), the process goes to step S206, where the mobile station apparatus 200 transmits the message part of the random access to the base station apparatus 100 (step S206), and intializes the retransmission number R (step S201).

On the other hand, the base station apparatus 100 starts a timer (step S207) and then, receives reports on the retransmission number R from the mobile station apparatuses 200 (step S208). Next, the base station apparatus 100 determines whether the timer is stopped (step S209). When determining that the timer is not stopped (NO in step S209), the process goes back to step S208, where the base station apparatus 100 further receives the reports on the retrnsmission number R from the mobile station apparatuses 200. On the other hand, when determining that the timer is stopped (YES in step S209), the process goes to step S210, where the base station apparatus 100 calculates an average value or a median value Rave (value Rave) of the retransmission number at the maximum transmission power level per mobile station apparatus (step S210). Then, the base station apparatus 100 compares the value Rave with predetermined threshold values (step S211 and S212). When determining that the value Rave is equal to or greater than the minimum value (Rmin) of a predetermined target range and equal to or less than the maximum value (Rmax) of the predetermined target range, the process goes back to steps S207 and S208 to start the timer and receives the reports on the RACH quality.
On the other hand, when determining that the value Rave is less than the value Rmin, the RACH quality (RACH received quality) is supposed to be in excessively good condition. The reasons for such a situation are supposed to be that, for example, there are few mobile stations attempting the random accesses at the same time, other-cell interference amount is small, and the received power level at the base station apparatus 100 is high. Therefore, the base station apparatus 100 reduces the resources for the RACH by reducing the time, frequency, code, or space resources to be allocated to the RACH by increasing the transfer rate per symbol in modulation and demodulation (step S213), and broadcasts the RACH parameter change instruction to the mobile station apparatuses 200 (step S215). In this case, to reduce the resources for the RACH, the number of the kinds of the signatures and the number of the random access sub-channels may be reduced, or an RACH received quality initial transmission power level may be reduced. Otherwise, the increase of the transmission power in power ramping may be reduced. Any of the above methods of reducing the resources for the RACH may be perfomed alone or in any combination thereof. Then, the process goes back to steps S207 and S208 to start the timer and receive the reports on the RACH quality from the mobile station apparatuses 200 again.

On the other hand, when determining that the value Rave is greater than the value Rmax, the RACH received quality is supposed to be in bad condition. The reasons for such a situation are supposed to be that, for example, there are many mobile stations attempting the random accesses at the same time, the other-cell interference amount is large, and the received power level at the base station apparatus 100 is low. Therefore, the base station apparatus 100 increases resources for the RACH by increasing the time, frequency, code, or space resources to be allocated to the RACH by reducing the transfer rate per symbol in modulation and demodulation (step S214), and broadcasts the RACH parameter change instruction to the mobile station apparatuses 200 (step S215).
In this case, to increase the resources for the RACH, the number of the kinds of the signatures and the number of the random access sub-channels may be increased, or the RACH received quality initial transmission power level may be increased. Otherwise, the increase of the transmission power in power ramping may be increased. Any of the above methods of increasing the resources for the RACH may be perfomed alone or in any combination thereof. Then, the process goes back to steps S207 and S208 to start the timer and receive the reports on the RACH quality from the mobile station apparatuses 200 again.

### Fourth embodiment

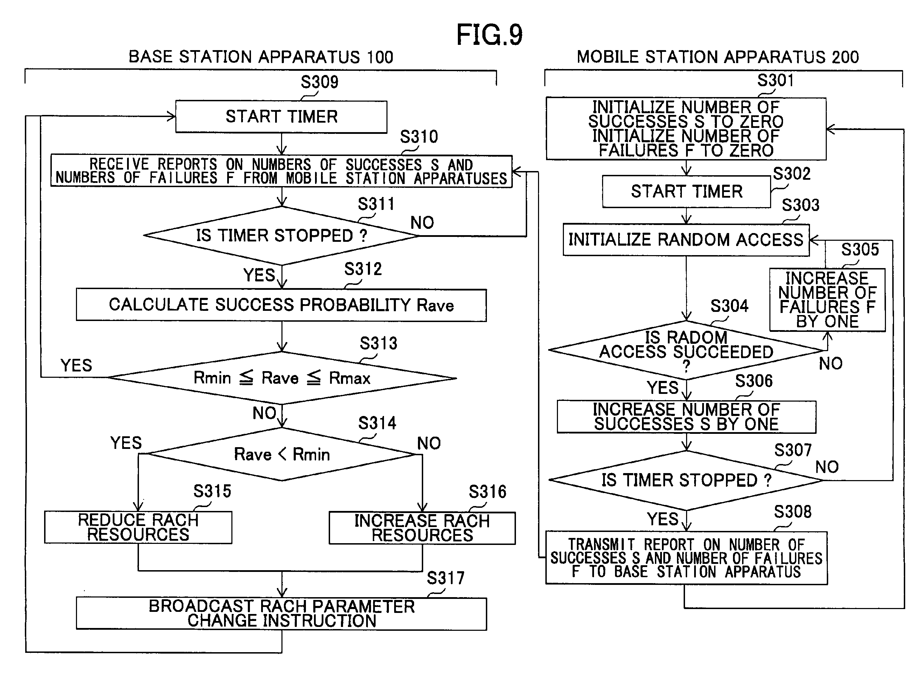

FIG. 9 is a flowchart illustrating an exemplary process of observing RACH quality and calculating RACH parameters based on a report on the success probability of the random accesses, the report being transmitted from the mobile station apparatus. Upon starting the random access, the mobile station apparatus 200 initializes the number of successes S and the number of failures F in the random accesses by setting their value to zero (step S301), and starts a timer (step S302). Then, the mobile station apparatus 200 initiates the random access (step S303). Next, the mobile station apparatus 200 determines whether the random access is succeeded or failed (step S304). When determining that the random access is failed (NO in step S304), the process goes to step S305, where the number of failures F is increased by one. Then, the process goes back to step S303, where, when necessary, the mobile station apparatus 200 initiates the random access again.
The trigger for initiating the random access depends on the system. On the other hand, when determining that the the random access is succeeded (YES in step S304), the process goes to step S306, where the number of successes S is increased by one. Then, the mobile station apparatus 200 determines whether the timer is stopped (step S307). When determined that the timer is not stopped yet (NO is step S307), the process goes back to step S303, where, when necessary, the mobile station apparatus 200 initiates the random access again. On the other hand, when determining that the the timer is stopped (YES is step S307), the process goes to step S308, where the mobile station apparatus 200 transmits a report on the number of successes S and the number of failures F to the base station apparatus 100. Then process goes back to step S301, where the the mobile station apparatus 200 initializes the number of successes S and the number of failures F again.

On the other hand, the base station apparatus 100 starts a timer (step S309) and then, receives the reports on the number of successes S and the number of failures F from the mobile station apparatuses 200 (step S310). Next, the base station apparatus 100 determines whether the timer is stopped (step S311). When determining that the timer is not stopped (NO in step S311), the process goes back to step S310, where the base station apparatus 100 further receives the reports on the number of successes S and the number of failures F from the mobile station apparatuses 200. On the other hand, when determining that the timer is stopped (YES in step S311), the process goes to step S312, where the base station apparatus 100 calculates the success probability (value Rave) of the random accesses by dividing a sum of the numbers of successes S of each of the mobile station apparatuses 200 by a sum of the random accesses (i.e. a sum of the number of successes S and the number of failures F) of each of the mobile station apparatuses 200. In this case, instead of using the success probability (value Rave) of the random accesses, the decoding probability of the preambles may be used as the value Rave. The decoding probability of the preambles is a value obtained by multiplying the success probability (value Rave) of the random accesses by a sum of the retransmission numbers of each of the random accesses. Further, as the value Rave, a sum of the numbers of the random accesses performed by each of the mobile station apparatuses 200 in a predetermined time period, a sum of the numbers of failures F of each of the mobile station apparatuses 200 in a predetermined time period, an average value of the numbers of the random accesses performed by each of the mobile station apparatuses 200 in a predetermined time period, or an average value of the numbers of failures F of each of the mobile station apparatuses 200 in a predetermined time period may be used.

Then, the base station apparatus 100 compares the value Rave with predetermined threshold values (step S313 and S314). When determining that the value Rave is equal to or greater than the minimum value (Rmin) of a predetermined target range and equal to or less than the maximum value (Rmax) of the predetermined target range, the process goes back to steps S309 and S310 to start the timer and receives the reports on the RACH quality. On the other hand, when determining that the value Rave is less than the value Rmin, the RACH quality (RACH received quality) is supposed to be in excessively good condition. The reasons for such a situation are supposed to be that, for example, there are few mobile stations attempting the random accesses at the same time, the other-cell interference amount is small, and the received power level at the base station apparatus 100 is high. Therefore, the base station apparatus 100 reduces the resources for the RACH by reducing the time, frequency, code, or space resources to be allocated to the RACH by increasing the transfer rate per symbol in modulation and demodulation (step S315), and broadcasts the RACH parameter change instruction to the mobile station apparatuses 200 (step S317). In this case, to reduce the resource for the RACH, the number of the kinds of the signatures and the number of the random access sub-channels may be reduced, or the RACH received quality initial transmission power level may be reduced. Otherwise, the increase of the transmission power in power ramping may be reduced. Any of the above methods of reducing the resources for the RACH may be perfomed alone or in any combination thereof. Then, the process goes back to steps S309 and S310 to start the timer and receive the reports on the RACH quality from the mobile station apparatuses 200 again.

On the other hand, when determining that the value Rave is greater than the value Rmax, the RACH received quality is supposed to be in bad condition. The reasons for such a situation are supposed to be that, for example, there are many mobile stations attempting the random accesses at the same time, the other-cell interference amount is large, and the received power level at the base station apparatus 100 is low. Therefore, the base station apparatus 100 increases resources for the RACH by increasing the time, frequency, code, or space resources to be allocated to the RACH by reducing the transfer rate per symbol in modulation and demodulation (step S316), and broadcasts the RACH parameter change instruction to the mobile station apparatuses 200 (step S317). In this case, to increase the resources for the RACH, the number of the kinds of the signatures and the number of the random access sub-channels may be increased, or the RACH received quality initial transmission power level may be increased. Otherwise, the increase of the transmission power in power ramping may be increased. Any of the above methods of increasing the resources for the RACH may be perfomed alone or in any combination thereof. Then, the process goes back to steps S309 and S310 to start the timer and receive the reports on the RACH quality from the mobile station apparatuses 200 again.

### Fifth embodiment

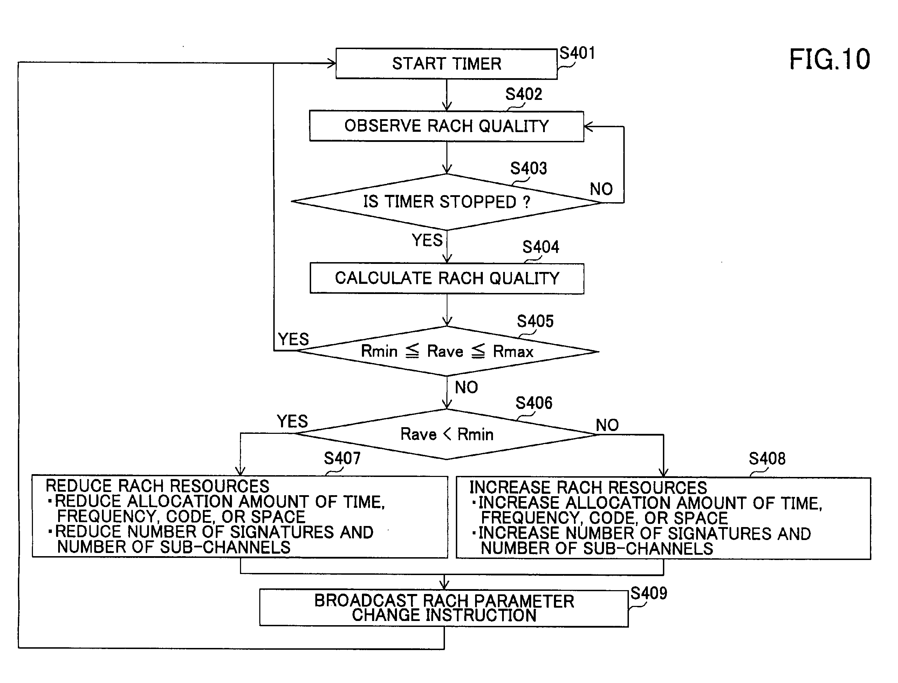

FIG. 10 is a flowchart illustrating an exemplary process of observing RACH quality and calculating RACH parameters. The base station apparatus 100 starts a timer to measure a predetermined observation period (step S401), and observes the RACH quality (step S402). Then, the base station apparatus 100 determines whether the timer is stopped (step S403). While determining that the time is not stopped yet (NO in step S403), the process goes back to step S402 and base station apparatus 100 further observes the RACH quality while detemining the timer is not stopped yet. Then, when determining the time is stopped (YES in step S403), the process goes to step S404, where the base station apparatus 100 calculates the RACH quality.

The RACH quality includes the decoding probability of the preambles (Rave), the SIR of known symbols transmitted using the resources blocks for RACH, and the number of receiving the preambles. The decoding probability of the preambles (Rave) is a value obtained by dividing the the number of successfully decoding the preambles in a predetermined time period by the number of received preambles in the predetermined time period. In cases other than cases of successfully decoding of the preambles, it cannot be determined whether the mobile station apparatus 200 transmitted the preambles. However, as long as the received power level of the signal received by using the resource blocks for the RACH is greater than a threshold value, by regarding (assuming) that the preambles are received, the number of reception of the preambles are calculated. Otherwise, the mobile station apparatus 200 may transmit known symbols by using resource blocks for the RACH, and the base station apparatus 100 may measure the SIR of the resource blocks; then, the measured SIR may be treated as the RACH quality. In the following, it is assumed that the decoding probability of the preambles (Rave) is used as the RACH quality.

Then, the base station apparatus 100 compares the value Rave with predetermined threshold values (step S405 and S406). When determining that the value Rave is equal to or greater than the minimum value (Rmin) of a predetermined target range and equal to or less than the maximum value (Rmax) of the predetermined target range, the process goes back to steps S401 and S402 to start the timer and then, observes the RACH quality again.

On the other hand, when determining that the value Rave is less than the value Rmin, the RACH quality (RACH received quality) is supposed to be in excessively good condition. In a case where the SIR of the resource blocks is used as the RACH quality, if the SIR is greater than a predetermined target value, the RACH received quality is supposed to be in excessively good condition. The reasons for such situations are supposed to be that, for example, there are few mobile stations attempting the random accesses at the same time, the other-cell interference amount is small, and the received power level at the base station apparatus 100 is high. Therefore, the base station apparatus 100 reduces the resources for the RACH by reducing the time, frequency, code, or space resources to be allocated to the RACH by increasing the transfer rate per symbol in modulation and demodulation (step S407), and broadcasts the RACH parameter change instruction to the mobile station apparatuses 200 (step S409). In this case, to reduce the resource for the RACH, the number of the kinds of the signatures and the number of the random access sub-channels may be reduced, or an RACH received quality initial transmission power level may be reduced. Otherwise, the increase of the transmission power in power ramping may be reduced. Any of the above methods of reducing the resources for the RACH may be perfomed alone or in any combination thereof. Then, the process goes back to steps S401 to start the timer again.

On the other hand, when determining that the value Rave is greater than the value Rmax, the RACH received quality is supposed to be in bad condition. In the case where the SIR of the resource blocks is used as the RACH quality, if the SIR is less than the predetermined target value, the RACH received quality is supposed to be in bad condition. The reasons for such situations are supposed to be that, for example, there are many mobile stations attempting the random accesses at the same time, the other-cell interference amount is large, and the received power level at the base station apparatus 100 is low. Therefore, the base station apparatus 100 increases resources for the RACH by increasing the time, frequency, code, or space resources to be allocated to the RACH by reducing the transfer rate per symbol in modulation and demodulation (step S408), and broadcasts the RACH parameter change instruction to the mobile station apparatuses 200 (step S409). In this case, to increase the resources for the RACH, the number of the kinds of the signatures and the number of the random access sub-channels may be increased, or the RACH received quality initial transmission power level may be increased. Otherwise, the increase of the transmission power in power ramping may be increased. Any of the above methods of increasing the resources for the RACH may be perfomed alone or in any combination thereof. Then, the process goes back to steps S401 to start the timer again.

### General overview

As described above, according to an embodiment of the present invention, it may become possible to perform automatic initial setting and automatic optimization of the RACH parameters in a mobile communication system. Further, the radio paramters may be optimized in real time in response to the changes of traffic distribution, propagation environments, and peripheral environment due to such as installation and removal of a surrounding base station. Furthermore, it may become possible to prevent the degradation of the cell throughtput and the call-blocking rate and the generataion of a non-service area.

The present invention is described by referring to preferred embodiments of the present invention. However, a person skilled in the art may understand that the above embodiments are described for illustrative purpose only and may think of examples of various modifications without departing from the wide scope and spirit defined in claims of the present invention. That is, the present invention should not be construed to be limited to the descriptions of specific embodiments and accompanying figures.

The present application is based on and claims the benefit of priority of Japanese Patent Application No. 2007-220257, filed on August 27, 2007, the entire contents of which are hereby incorporated herein by reference.

## Claims

1. A base station apparatus in a mobile communication system, the base station apparatus comprising:
a receiving unit configured to receive a random access channel transmitted from a mobile station apparatus;
an acquisition unit configured to acquire random access channel quality based on a measurement of the received random access channel or a report from the mobile station apparatus;
a calculation unit configured to calculate random access channel parameters based on the acquired random access channel quality; and
a broadcast unit configured to broadcast the calculated random access channel parameters to all the mobile stations within a coverage area of the base station.

2. The base station apparatus according to claim 1, wherein
the random access channel quality includes at least one of a retransmission number of the random access channel, a retransmission number of the random access at a maximum transmission power level under a control of increasing a transmission power level of the random access channel when a receipt of the random access channel is failed in the base station apparatus, a success probability of the random accesses, a detection probability of the random access channel, a number of mobile station apparatuses having attempted to perform the random accesses per unit time, a number of mobile station apparatuses having succeeded to perform the random access per unit time, and a number of mobile station apparatuses having failed to perform the random access per unit time.

3. The base station apparatus according to claim 1 or 2, wherein
the random access channel parameters includes at least one of time, frequency, an allocated amount of code or space, initial transmission power level, increase of transmission power, a maximum retransmission number, a number of signatures, and a number of sub-channels.

4. A mobile station apparatus in a mobile communication system, the mobile station apparatus comprising:
a measurement unit configured to measure random access channel quality;
a reporting unit configured to report the measured random access channel quality to a base station apparatus;
a receiving unit configured to receive random access channel parameters broadcasted from the base station apparatus;
a control unit configured to control the random access channel parameters; and
a transmission unit configured to transmit a random access channel based on the controlled random access channel parameters.

5. The mobile station apparatus according to claim 4, wherein
the random access channel quality includes at least one of a retransmission number of the random access channel, a retransmission number of the random access at a maximum transmission power level under a control of increasing a transmission power level of the random access channel when a receipt of the random access channel is failed in the base station apparatus, a success probability of the random accesses, and a detection probability of the random access channel.

6. A control method used in a base station apparatus mobile in a mobile communication system, the control method comprising the steps of:
receiving a random access channel transmitted from a mobile station apparatus;
acquiring random access channel quality based on a measurement of the received random access channel or a report from the mobile station apparatus;
calculating random access channel parameters based on the acquired random access channel quality; and
broadcasting the calculated random access channel parameters to all the mobile stations within a coverage area of the base station.
